# EUROPÄISCHE PATENTSCHRIFT

(11) **EP 4 419 818 B1**
(45) Veröffentlichungstag und Bekanntmachung des Hinweises auf die Patenterteilung: **22.04.2026**
(21) Anmeldenummer: 22798144.6
(22) Anmeldetag: 06.10.2022
(51) Int. Cl.: F16J 15/34

(54) **GLEITRING MIT VERSCHLEISS-MESSEINRICHTUNG SOWIE GLEITRINGDICHTUNGSANORDNUNG MIT DERARTIGEM GLEITRING**
SLIDE RING WITH WEAR MEASURING DEVICE AND SLIDE RING SEALING ARRANGEMENT HAVING SUCH A SLIDE RING
BAGUE DE GLISSEMENT AVEC DISPOSITIF DE MESURE D'USURE ET AGENCEMENT D'ÉTANCHÉITÉ À BAGUE DE GLISSEMENT COMPORTANT UNE TELLE BAGUE DE GLISSEMENT

(30) Priorität: 19.10.2021 DE 102021127019
(43) Veröffentlichungstag der Anmeldung: 28.08.2024
(73) Patentinhaber: EagleBurgmann Germany GmbH & Co. KG, 82515 Wolfratshausen (DE)
(72) Erfinder: OTSCHIK, Joachim, 82418 Murnau (DE); KREFT, Stefanie, 81369 München (DE); SUSZNIAK, Robert, 82538 Geretsried (DE)
(74) Vertreter: Hoefer & Partner Patentanwälte mbB
(86) Internationale Anmeldenummer: PCT/EP2022/077783
(87) Internationale Veröffentlichungsnummer: WO 2023/066670

(56) Entgegenhaltungen:
- EP-A1- 0 077 206
- JP-A- H02 176 270
- JP-U- H0 540 662
- JP-U- H0 581 568

## Beschreibung

Die Erfindung betrifft einen stationären Gleitring einer Gleitringdichtungsanordnung mit einer Verschleiß-Messeinrichtung sowie eine Gleitringdichtungsanordnung mit einem derartigen stationären Gleitring.

Gleitringdichtungen sind aus dem Stand der Technik in unterschiedlichen Ausgestaltungen bekannt. Zwar werden Gleitringdichtungen im Betrieb grundsätzlich berührungslos betrieben, da zwischen den Gleitringen im Dichtspalt ein Gas oder eine Flüssigkeit vorhanden ist, allerdings tritt beim Anfahren und Abstellen einer mit der Gleitringdichtung abgedichteten Vorrichtung ein Kontakt an den Gleitflächen auf. Auch können aufgrund äußerer Einflussfaktoren im Betrieb Kontakte an den Gleitflächen auftreten, was zu einem Verschleiß der Gleitflächen und gegebenenfalls zu einem notwendigen Austausch führt. Da im schlimmsten Fall aufgrund des Verschleißes ein Versagen der Gleitringdichtung und damit ein Austreten des abzudichtenden Mediums möglich ist, sollte ein Austausch von verschlissenen Gleitringen möglichst schon vor einem vollständigen Versagen durchgeführt werden. Allerdings sollte der Austausch auch nicht zu früh erfolgen, da Gleitringe sehr kostspielige Bauteile sind. JP H02176270 A offenbart eine Gleitringdichtungsanordnung mit einer Verschleiß-Messeinheit, welche von hinten durch eine Bohrung bis zur Gleitfläche des stationären Gleitrings geführt wird.

Von daher ist es Aufgabe der vorliegenden Erfindung einen Gleitring und eine Gleitringdichtungsanordnung bereitzustellen, welche bei einfachem Aufbau und einfacher, kostengünstiger Herstellbarkeit eine Verschleiß-Messeinrichtung aufweisen, um mit hoher Genauigkeit einen Verschleiß des Gleitrings zu erfassen.

Diese Aufgabe wird durch einen stationären Gleitring einer Gleitringdichtungsanordnung mit den Merkmalen des Anspruchs 1 und eine Gleitringdichtungsanordnung mit den Merkmalen des Anspruchs 11 gelöst. Die Unteransprüche zeigen bevorzugte Weiterbildungen der Erfindung.

Der stationäre Gleitring einer Gleitringdichtungsanordnung mit den Merkmalen des Anspruchs 1 weist den Vorteil auf, dass eine sichere Erfassung eines Verschleißes des stationären

Gleitrings an seiner Gleitfläche möglich ist. Insbesondere kann beim erfindungsgemäßen stationären Gleitring auch ein aktueller Verschleiß auf einfache und sichere Weise festgestellt werden. Somit kann beim erfindungsgemäßen stationären Gleitring nicht nur das Erreichen einer definierten Verschleißgrenze erfasst werden, sondern es ist auch möglich, dass der vorhandene Verschleiß kontinuierlich über die Nutzungsdauer des stationären Gleitrings bis zum Erreichen der Verschleißgrenze erfassbar ist. Dabei weist der stationären Gleitring trotzdem einen einfachen und kostengünstigen Aufbau auf. Dies wird erfindungsgemäß dadurch erreicht, dass der stationäre Gleitring einen Grundkörper mit einer Gleitfläche und eine Verschleiß-Messeinrichtung aufweist. Die Verschleiß-Messeinrichtung ist am Grundkörper angeordnet. Die Verschleiß-Messeinrichtung ist eingerichtet, einen aktuellen Verschleiß des stationären Gleitrings an seiner Gleitfläche basierend auf einer Änderung einer elektrischen Größe zu erfassen. Die Verschleiß-Messeinrichtung umfasst dabei eine elektrische Spannungsquelle, einen Messbereich an der Gleitfläche des stationären Gleitrings, eine elektrische Zuleitung, welche die Spannungsquelle mit dem Messbereich elektrisch verbindet und eine elektrische Rückleitung, welche den Messbereich mit der Spannungsquelle verbindet. Der Messbereich der Verschleiß-Messeinrichtung ist dabei in einer Vertiefung in der Gleitfläche des stationären Gleitrings angeordnet. Der Messbereich schließt somit den elektrischen Stromkreis von der Spannungsquelle über die Zuleitung und die Rückleitung. Wenn nun ein Verschleiß an der Gleitfläche auftritt, verschleißt auch der Messbereich entsprechend. Dadurch ändert sich aber z.B. der elektrische Widerstand am Messbereich, da durch den Verschleiß der in der Vertiefung angeordnete Messbereich dünner wird. Die Änderung des Widerstands ist dabei im Wesentlichen proportional zu einem Verschleißabtrag. Dadurch kann somit durch Erfassung der Änderung des elektrischen Widerstands des Stromkreises der an der Gleitfläche des stationären Gleitrings auftretende Verschleiß sehr genau bestimmt werden. Hierbei können auch Änderungen anderer elektrischer Größen gemessen werden.

Vorzugsweise ist die Vertiefung in der Gleitfläche des stationären Gleitrings vollständig mit einem elektrisch leitfähigen Material gefüllt. Die an der Außenseite liegende Fläche des elektrisch leitfähigen Materials in der Vertiefung ist dabei plan mit der Gleitfläche des Grundkörpers des stationären Gleitrings. Dadurch ist sichergestellt, dass der Verschleiß ausgehend von einem neuen Gleitring über die gesamte Lebensdauer des Gleitrings kontinuierlich erfassbar ist.

Das elektrisch leitfähige Material in der Vertiefung ist vorzugsweise Titannitrid. Weiter bevorzugt ist der stationäre Gleitring aus einem Carbid-Material hergestellt, insbesondere SiC oder WC, wobei das Carbid-Material derart angepasst ist, dass es keine oder nur eine minimale elektrische Leitfähigkeit aufweist.

Bevorzugt ist die Tiefe der Vertiefung derart gewählt, dass bei Auftreten eines Verschleißes bis zu einem Boden der Vertiefung eine Verschleißgrenze des stationären Gleitrings erreicht ist. Wenn somit das sich in der Vertiefung befindliche Material vollständig durch Verschleiß abgetragen ist, ist der elektrische Stromkreis der Verschleiß-Messeinrichtung unterbrochen, was ein einfach erfassbarer Indikator für das Erreichen einer vorbestimmten Verschleißgrenze des stationären Gleitrings ist.

Um an dem Messbereich in der Vertiefung einen möglichst gleichmäßigen Verschleiß zu haben, ist die Vertiefung vorzugsweise als bogenförmige Nut ausgebildet.

Weiter bevorzugt ist die elektrische Zuleitung durch eine erste Bohrung im Grundkörper des stationären Gleitrings zum Messbereich hindurchgeführt und/oder die elektrische Rückleitung ist durch eine zweite Bohrung im Grundkörper des stationären Gleitrings hindurchgeführt. Die erste Bohrung und die zweite Bohrung sind vorzugsweise auf gleichem Radius angeordnet.

Besonders bevorzugt ist dabei ein elektrisch leitfähiges Füllmaterial in der ersten Bohrung und/oder der zweiten Bohrung im Grundkörper angeordnet, wobei das Füllmaterial die erste und/oder zweite Bohrung jeweils vollständig ausfüllt. Als elektrisch leitfähiges Füllmaterial wird vorzugsweise Silber verwendet.

Weiter bevorzugt ist eine Breite der Vertiefung größer oder gleich einem Durchmesser der ersten und/oder zweiten Bohrung. Vorzugsweise ist der Durchmesser der ersten und zweiten Bohrung gleich, insbesondere beträgt der Durchmesser der ersten und zweiten Bohrung jeweils 1 mm ±10%.

Weiter bevorzugt ist die bogenförmige Vertiefung auf einem in Radialrichtung mittleren Umfangsabschnitt der Gleitfläche angeordnet.

Um zu verhindern, dass der stationäre Gleitring durch das Vorsehen der Verschleiß-Messeinrichtung eine Unwucht oder eine Welligkeit oder eine andere Art einer geometrischen Verformung aufweist, ist vorzugsweise eine zweite Verschleiß-Messeinrichtung am Grundkörper angeordnet, welche um 180° gegenüber der ersten Verschleiß-Messeinrichtung angeordnet ist. Alternativ können auch drei Verschleiß-Messeinrichtungen in gleichem Umfangsabstand oder vier Verschleiß-Messeinrichtungen in gleichem Umfangsabstand am stationären Gleitring vorgesehen sein. Alle Messeinrichtungen sind vorzugsweise identisch ausgebildet.

Ferner betrifft die vorliegende Erfindung eine Gleitringdichtungsanordnung umfassend eine Gleitringdichtung mit einem rotierenden Gleitring und einem erfindungsgemäßen stationären Gleitring. Die Gleitringe weisen zwischen ihren Gleitflächen einen Dichtspalt auf und die Gleitringdichtungsanordnung umfasst ferner eine automatisierte Messeinheit, welche eingerichtet, einen Verschleiß an der Gleitfläche des stationären Gleitrings zu erfassen. Der Verschleiß wird dabei durch Messung von elektrischen Größen, insbesondere eines elektrischen Widerstands, des in den stationären Gleitring integrierten elektrischen Stromkreises bestimmt und basierend auf einem Vergleich mit abgespeicherten Vergleichsdaten auf einen Verschleiß des stationären Gleitrings geschlossen. Die abgespeicherten Vergleichsdaten können dabei Daten sein, welche auf einem Prüfstand erfasst worden sind und/oder Daten, welche im Betrieb von Gleitringdichtungen erfasst wurden. Insbesondere können die abgespeicherten Vergleichsdaten kontinuierlich durch Hinzunahme neuer Daten aus dem Betrieb von Gleitringdichtungen aktualisiert werden.

Vorzugsweise erfasst die automatisierte Messeinheit die zur Bestimmung des Verschleißes erfassten elektrischen Größen, insbesondere den elektrischen Widerstand, kontinuierlich oder in kürzeren Intervallen, beispielsweise halbstündlich oder stündlich während des normalen Betriebs der Gleitringdichtungsanordnung.

Somit kann mittels der vorliegenden Erfindung zu jedem gewünschten Zeitpunkt ein Verschleiß des stationären Gleitrings bestimmt werden. Basierend auf dem Verschleiß des stationären Gleitrings kann dann auf den Verschleiß der gesamten Gleitringdichtung geschlossen werden und gegebenenfalls ein Austausch der Gleitringe eingeleitet werden. Somit kann mit hoher Sicherheit ein plötzlicher Ausfall der Gleitringdichtung vermieden werden, sodass, insbesondere bei der Abdichtung von für die Umwelt gefährlicher Medien, ein plötzliches Versagen der Gleitringdichtung und damit ein möglicherweises Austreten des gefährlichen Mediums verhindert werden. Vorzugsweise wird ein Austausch der Gleitringe schon dann eingeleitet, bevor die definierte maximale Verschleißgrenze erreicht ist, so dass ein Austausch der Gleitringe auch für einen Nutzer der Gleitringdichtungsanordnung beispielsweise in einer großen Anlage, planbar ist.

Nachfolgend werden bevorzugte Ausführungsbeispiele der Erfindung unter Bezugnahme auf die begleitende Zeichnung im Detail beschrieben. In der Zeichnung ist:
- Fig. 1: eine schematische Schnittansicht einer Gleitringdichtungsanordnung mit einem stationären Gleitring gemäß einem ersten Ausführungsbeispiel der vorliegenden Erfindung,
- Fig. 2: eine schematische, perspektivische Ansicht des stationären Gleitrings von Fig. 1,
- Fig. 3: eine schematische Schnittansicht entlang der Linie III-III von Fig. 2 des stationären Gleitrings,
- Fig. 4: eine schematische, vergrößerte Querschnittsansicht entlang der Linie IV-IV von Fig. 3 des stationären Gleitrings, und
- Fig. 5: eine schematische, perspektivische Ansicht eines stationären Gleitrings gemäß einem zweiten Ausführungsbeispiel der Erfindung.

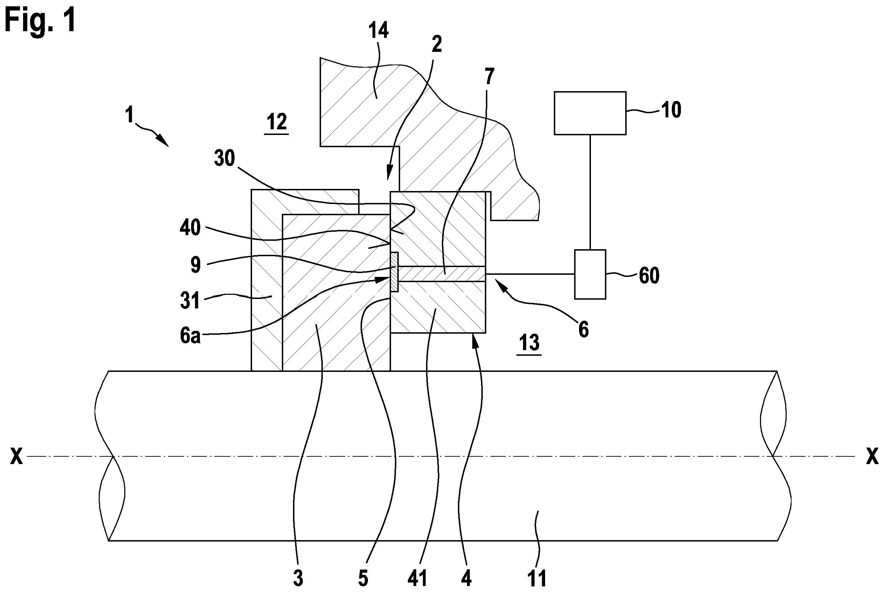

Nachfolgend wird unter Bezugnahme auf die Figuren 1 bis 4 eine Gleitringdichtungsanordnung 1 mit einem stationären Gleitring 4 gemäß einem ersten Ausführungsbeispiel der Erfindung im Detail beschrieben.

Wie aus Fig. 1 ersichtlich ist, umfasst die Gleitringdichtungsanordnung 1 eine Gleitringdichtung 2 mit einem rotierenden Gleitring 3 und dem stationären Gleitring 4. Zwischen einer Gleitfläche 30 des rotierenden Gleitrings 3 und einer Gleitfläche 40 des stationären Gleitrings 4 ist ein Dichtspalt 5 definiert.

Die Gleitringdichtung 2 dichtet dabei an einer Welle 11 einen Produktbereich 12 von einem Atmosphärenbereich 13 ab. Der rotierende Gleitring 3 ist mittels eines Gleitringträgers 31 der Welle 11 verbunden.

Der stationäre Gleitring 4 ist an einem feststehenden Gehäuse 14 angeordnet.

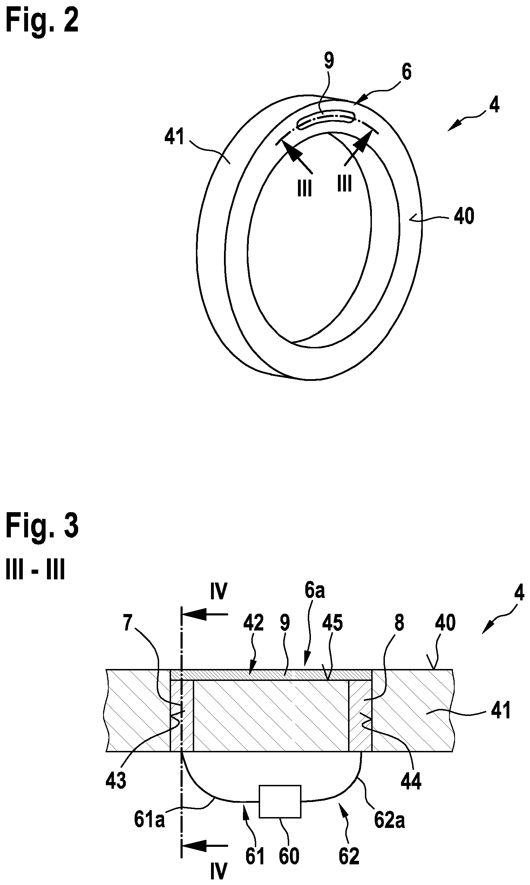

Der stationäre Gleitring 4 ist im Detail aus den Figuren 2 bis 4 ersichtlich. Der stationäre Gleitring 4 weist dabei einen Grundkörper 41 auf, an welchem die zum rotierenden Gleitring 3 gerichtete Gleitfläche 40 ausgebildet ist.

Weiterhin umfasst der stationäre Gleitring 4 eine Verschleiß-Messeinrichtung 6. Die Verschleiß-Messeinrichtung 6 ist am Grundkörper 41 angeordnet und ist eingerichtet, einen aktuellen Verschleiß des stationären Gleitrings 4 der Gleitringdichtung 2 zu erfassen. Der Verschleiß wird dabei an der Gleitfläche 40 des stationären Gleitrings 4 erfasst.

Die Verschleiß-Messeinrichtung 6 umfasst dabei eine elektrische Spannungsquelle 60, einen Messbereich 6a an der Gleitfläche 40 des stationären Gleitrings, eine elektrische Zuleitung 61 und eine elektrische Rückleitung 62. Die elektrische Zuleitung 61 verbindet die Spannungsquelle 60 mit dem Messbereich 6a. Die elektrische Rückleitung 62 verbindet den Messbereich 6a mit der Spannungsquelle 60.

Somit ist in den stationären Gleitring 4 ein elektrischer Stromkreis integriert, wobei der Messbereich 6a an der Gleitfläche 40 angeordnet ist.

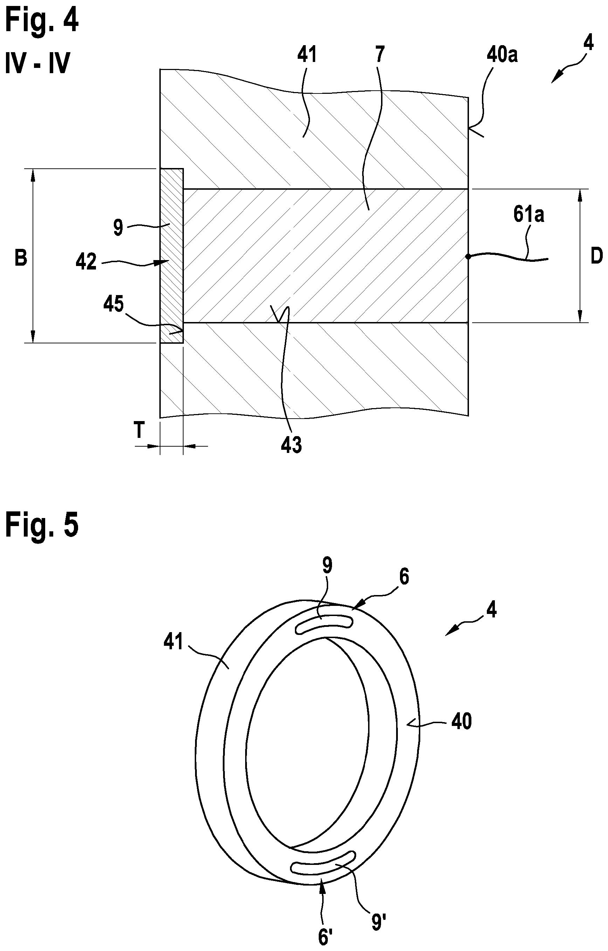

Wie im Detail aus den Figuren 3 und 4 ersichtlich ist, ist in der Gleitfläche 40 eine bogenförmige Vertiefung 42 (vgl. Fig. 2) ausgebildet. Die bogenförmige Vertiefung 42 ist mit einem elektrisch leitfähigen Material 9, insbesondere Titannitrid vollständig aufgefüllt. Eine Oberfläche des Messbereichs 6a ist dabei plan zur Gleitfläche 40 des stationären Gleitrings 4, wie in Fig. 3 dargestellt.

Wie weiter aus Fig. 3 ersichtlich ist, ist im Grundkörper 41 des stationären Gleitrings 4 eine erste Bohrung 43 und eine zweite Bohrung 44 ausgebildet. Die erste und zweite Bohrung 43, 44 sind dabei derart ausgebildet, dass jeweils eine Bohrung an einem Endbereich der bogenförmigen Vertiefung 42 angeordnet ist (vgl. Fig. 3). Die erste und zweite Bohrung 43, 44 sind dabei vollständig durch den Grundkörper 41 bis zu einer Rückseite 40a hindurchgeführt. Die beiden Bohrungen 43, 44 sind dabei parallel zu einer Axialrichtung X-X der Gleitringdichtungsanordnung 1 geradlinig durch den Grundkörper 41 hindurchgeführt.

Wie insbesondere aus Fig. 3 weiter ersichtlich ist, ist die erste Bohrung 43 vollständig mit einem ersten leitfähigen Füllmaterial 7 ausgefüllt. Das erste elektrisch leitfähige Füllmaterial 7 ist dabei an der Rückseite 40a des stationären Gleitrings 4 mittels einem Leitungsabschnitt 61a mit der elektrischen Spannungsquelle 60 verbunden. In gleicher Weise ist auch die zweite Bohrung 44 mit einem zweiten elektrisch leitfähigen Füllmaterial 8 aufgefüllt, welches mittels eines Leitungsabschnitts 62a der Rückleitung 62 mit der elektrischen Spannungsquelle 60 verbunden ist.

Das erste und zweite Füllmaterial 7, 8 ist vorzugsweise ein gleiches Material, insbesondere Silber. Silber hat den Vorteil, dass es eine sehr gute elektrische Leitfähigkeit aufweist und relativ einfach in die Bohrungen 43, 44 eingebracht und ausgehärtet werden kann. Weiterhin kann auch eine einfache Anbindung der Leitungsabschnitte 61a, 62a der Zuleitung und der Rückleitung der Verschleiß-Messeinrichtung 6 gewährleistet werden.

Die erste und zweite Bohrung 43, 44 sind vorzugsweise gleich ausgebildet und weisen einen Durchmesser D auf. Die bogenförmige Vertiefung 42 weist, wie insbesondere aus Fig. 4 ersichtlich ist, eine Breite B auf, welche größer ist als der Durchmesser D der Bohrungen 43, 44. Die Vertiefung 42 weist dabei eine Tiefe T von maximal 10 µm, besonders bevorzugt maximal 5 µm auf. Der Durchmesser D der ersten und zweiten Bohrung beträgt vorzugsweise 1 mm.

Die Tiefe T der Vertiefung 42 ist dabei derart gewählt, dass bei Erreichen eines Bodens 45 der Vertiefung 42 ein maximaler Verschleiß der Gleitfläche 40 des stationären Gleitrings 4 erreicht ist.

Das Material des stationären Gleitrings 4 ist vorzugsweise eine elektrisch nicht leitende Keramik. Es sei angemerkt, dass als Material für den stationären Gleitring 4 auch ein Material verwendet wird, welches eine deutlich schlechtere elektrische Leitfähigkeit als die Füllmaterialien 7, 8 der Verschleiß-Messeinrichtung 6 aufweist. Vorzugsweise wird als Material für den stationären Gleitring ein Siliciumcarbid aufweisendes Material verwendet.

Das Material 9 in der Vertiefung 42 wird vorzugsweise mittels eines Beschichtungsverfahrens in die Vertiefung 42 eingebracht, beispielsweise eines PVD-Verfahrens. Da dadurch auch häufig teilweise Bereiche der Gleitfläche 40, die um die Vertiefung 42 liegen, mitbeschichtet werden, wird in einem weiteren Schritt noch eine Oberflächenbehandlung der Gleitfläche 40 ausgeführt, um diese über die Vertiefung 42 überstehende Beschichtung abzutragen.

Somit ist nun in den stationären Gleitring 4 die Verschleiß-Messeinrichtung 6 integriert, welche bei Anlegen einer Spannung somit einen ersten Widerstandswert als elektrische Größe im Neuzustand aufweist. Nach einem Einbau der Gleitringdichtung 2 zur Abdichtung an der Welle 11 tritt nun im Betrieb ein Verschleiß an den Gleitflächen 30, 40 der Gleitringe 3, 4 auf. Hierbei tritt jedoch auch ein Verschleiß an dem in der Vertiefung 42 angeordneten Material 9 auf. Dadurch ändert sich jedoch der elektrische Widerstand des Stromkreises der Verschleiß-Messeinrichtung 6, da ein Materialabtrag des Materials 9 zu einem reduzierten Querschnitt am Messbereich 6a führt.

Es wurde nun festgestellt, dass ein eindeutiger Zusammenhang zwischen dem sich ändernden Widerstand am Messbereich 6a und dem Verschleiß am Messbereich durch Abtrag von Material 9 an der Oberfläche des Messbereichs vorhanden ist. Dies kann nun für eine Verschleißbestimmung der Gleitfläche 40 des stationären Gleitrings 4 verwendet werden. Je geringer der Querschnitt des Materials 9 in der Vertiefung 42 aufgrund eines zunehmenden Verschleißes an der Gleitfläche 40 wird, umso größer wird ein Widerstandswert des elektrischen Stromkreises der Verschleiß-Messeinrichtung 6.

Mittels einer automatisierten Messeinheit 10 (vgl. Fig. 1), welche eingerichtet ist, den Verschleiß an der Gleitfläche 40 des stationären Gleitrings 4 zu bestimmen, kann somit durch einfaches Anlegen einer Spannung an den in den stationären Gleitring 4 integrierten Stromkreis zu jedem beliebigen Zeitpunkt ein Verschleiß der Gleitfläche 40 ermittelt werden. Hierbei ist es möglich, dass kontinuierlich eine Spannung anliegt oder alternativ, dass die Messung in Intervallen, beispielsweise stündlich oder täglich oder einem anderen beliebigen Intervall, welches von den Einsatzbedingungen der Gleitringdichtung 2 abhängt, bestimmt wird.

Somit ist erfindungsgemäß eine Möglichkeit gegeben, mit höchster Sicherheit einen Verschleiß an der Gleitfläche 40 des stationären Gleitrings 4 zu bestimmen. Hierbei ist es auch möglich, aufgrund des bestimmten Verschleißes an der Gleitfläche 40 des stationären Gleitrings 4 auch auf einen Verschleiß am rotierenden Gleitring 3 zu schließen. Somit kann frühzeitig eine Wartung und beispielsweise ein Austausch der Gleitringe geplant werden, ohne dass es zu einem kompletten Ausfall aufgrund eines mit zunehmendem Verschleiß auftretenden Versagens der Gleitringdichtung 2 kommt. Dadurch kann eine Wartung der Gleitringdichtung für einen Nutzer planbar und dann zu einem möglichst günstigen Zeitpunkt für den Nutzer durchgeführt werden.

Die Tiefe T der Vertiefung 42 und damit der Querschnitt des Materials 9 am Messbereich 6a ist dabei vorzugsweise derart gewählt, dass die Tiefe T einem maximal zulässigen Verschleiß an der Gleitfläche 40 des stationären Gleitrings 4 entspricht. Wenn somit ein Verschleiß so weit fortgeschritten ist, dass das Material 9 in der Vertiefung 42 bis zum Boden 45 vollständig verschlissen ist, kommt es zu einer Unterbrechung des Stromkreises und somit zu einem eindeutigen Hinweis für das Erreichen der maximalen Verschleißgrenze des stationären Gleitrings 4.

Fig. 5 zeigt einen stationären Gleitring 4 einer Gleitringdichtungsanordnung gemäß einem zweiten Ausführungsbeispiel der Erfindung. Gleiche bzw. funktional gleiche Teile sind mit den gleichen Bezugszeichen wie im ersten Ausführungsbeispiel bezeichnet. Im Unterschied zum ersten Ausführungsbeispiel ist beim zweiten Ausführungsbeispiel eine erste Verschleiß-Messeinrichtung 6 und eine zweite Verschleiß-Messeinrichtung 6' vorgesehen. Wie aus Fig. 5 ersichtlich ist, ist hierbei für jede Verschleiß-Messeinrichtung 6, 6' ein eigener Messbereich mit elektrisch leitfähigem Material 9, 9' in jeweils einer Vertiefung vorgesehen. Die beiden Verschleiß-Messeinrichtungen 6, 6' liegen sich dabei am Umfang des stationären Gleitrings 4 um 180° gegenüber. Hierdurch wird insbesondere sichergestellt, dass Unwuchten oder unerwünschte Welligkeiten, welche durch das Vorsehen der Verschleiß-Messeinrichtung 6 im Bereich der Gleitfläche 40 auftreten könnten, ausgeglichen werden können. Es sei weiterhin angemerkt, dass eine alternative Ausgestaltung auch derart vorgesehen sein kann, dass drei Verschleiß-Messeinrichtungen 6 in gleichen Abständen entlang des Umfangs vorgesehen sind oder vier Verschleiß-Messeinrichtungen 6 am Umfang mit gleichen Umfangsabständen vorgesehen sein können. Ansonsten entspricht dieses Ausführungsbeispiel dem ersten Ausführungsbeispiel, so dass auf die dort gegebene Beschreibung verwiesen werden kann.

Wie in den Ausführungsbeispielen dargelegt, kann somit eine Gleitringdichtungsanordnung bereitgestellt werden, welche eine vorausschauende Wartung der Gleitringdichtungsanordnung ermöglicht. Ein Verschleißzustand kann dabei im Betrieb der Gleitringdichtungsanordnung kontinuierlich oder in vorgewählten Intervallen durchgeführt werden. Dadurch kann ein rechtzeitiger Austausch von Gleitringen der Gleitringdichtungsanordnung ermöglicht werden, so dass ein plötzlicher, unerwünschter Totalausfall der Gleitringdichtungsanordnung, welcher üblicherweise zu einem kompletten Stillstand einer Maschine führt, in welcher die Gleitringdichtungsanordnung abdichtet, vermieden werden.

### Bezugszeichenliste

- 1: Gleitringdichtungsanordnung
- 2: Gleitringdichtung
- 3: rotierender Gleitring
- 4: stationärer Gleitring
- 5: Dichtspalt
- 6: Verschleiß-Messeinrichtung
- 6': zweite Verschleiß-Messeinrichtung
- 6a: Messbereich
- 7: erstes elektrisch leitfähiges Füllmaterial
- 8: zweites elektrisch leitfähiges Füllmaterial
- 9, 9': elektrisch leitfähiges Material in Vertiefung
- 10: automatisierte Messeinheit
- 11: Welle
- 12: Produktbereich
- 13: Atmosphärenbereich
- 14: Gehäuse
- 30: Gleitfläche des rotierenden Gleitrings
- 31: Gleitringträger
- 40: Gleitfläche des stationären Gleitrings
- 40a: Rückseite
- 41: Grundkörper
- 42: bogenförmige Vertiefung
- 43: erste Bohrung
- 44: zweite Bohrung
- 45: Boden der Vertiefung
- 60: elektrische Spannungsquelle
- 61: Zuleitung
- 61a: Leitungsabschnitt
- 62: Rückleitung
- 62a: Leitungsabschnitt
- B: Breite
- D: Durchmesser der Bohrungen
- T: Tiefe der Vertiefung
- X-X: Axialrichtung

## Patentansprüche

1. Stationärer Gleitring einer Gleitringdichtungsanordnung, umfassend
- einen Grundkörper (41) mit einer Gleitfläche (40) und
- eine Verschleiß-Messeinrichtung (6), welche am Grundkörper (41) angeordnet ist, um einen Verschleiß der Gleitfläche (40) des stationären Gleitrings basierend auf einer Änderung einer elektrischen Größe zu erfassen,
- wobei die Verschleiß-Messeinrichtung (6) eine elektrische Spannungsquelle (60), einen Messbereich (6a) an der Gleitfläche (40), eine elektrische Zuleitung (61), welche die Spannungsquelle (60) mit dem Messbereich (6a) elektrisch verbindet, und eine elektrische Rückleitung (62), welche den Messbereich (6a) mit der Spannungsquelle (60) elektrisch verbindet, aufweist und
- **dadurch gekennzeichnet, dass** der Messbereich (6a) in einer Vertiefung (42) in der Gleitfläche (40) angeordnet ist.

2. Stationärer Gleitring nach Anspruch 1, wobei die Vertiefung (42) vollständig mit einem elektrisch leitfähigen Material (9) gefüllt ist.

3. Stationärer Gleitring nach einem der vorhergehenden Ansprüche, wobei eine Tiefe (T) der Vertiefung (42) derart gewählt ist, dass bei einem Erreichen eines Bodens (45) der Vertiefung (42) ein maximal zulässiger Verschleiß der Gleitfläche (40) des stationären Gleitrings erreicht ist.

4. Stationärer Gleitring nach einem der vorhergehenden Ansprüche, wobei die Vertiefung (42) eine bogenförmige Nut ist.

5. Stationärer Gleitring nach einem der vorhergehenden Ansprüche, wobei die elektrische Zuleitung (61) durch eine erste Bohrung (43) im Grundkörper (41) hindurchgeführt ist und/oder wobei die elektrische Rückleitung (62) durch eine zweite Bohrung (44) im Grundkörper (41) hindurchgeführt ist.

6. Stationärer Gleitring nach Anspruch 5, wobei die erste Bohrung (43) und die zweite Bohrung (44) auf einem gleichen Radius an der Gleitfläche (40) angeordnet sind.

7. Stationärer Gleitring nach Anspruch 5 oder 6, wobei die elektrische Zuleitung (61) im Bereich der ersten Bohrung (43) durch ein erstes elektrisch leitfähiges Füllmaterial (7) bereitgestellt ist, wobei das erste Füllmaterial (7) die Bohrung (43) vollständig ausfüllt, und/oder wobei die elektrische Rückleitung (62) im Bereich der zweiten Bohrung (44) durch ein zweites elektrisch leitfähiges Füllmaterial (8) bereitgestellt ist, wobei das zweite Füllmaterial (8) die zweite Bohrung (44) vollständig ausfüllt.

8. Stationärer Gleitring nach einem der Ansprüche 5 bis 7, wobei eine Breite (B) der Vertiefung (42) größer oder gleich ist wie ein Durchmesser (D) der ersten und zweiten Bohrung (43, 44).

9. Stationärer Gleitring nach einem der Ansprüche 4 bis 8, wobei die Vertiefung (42) auf einem in Radialrichtung des stationären Gleitrings mittleren Umfangsabschnitt der Gleitfläche (40) liegt.

10. Stationärer Gleitring nach einem der vorhergehenden Ansprüche, umfassend
- eine erste Verschleiß-Messeinrichtung (6) und eine zweite Verschleiß-Messeinrichtung (6'), welche der ersten Verschleiß-Messeinrichtung (6) um 180° gegenüberliegt.

11. Gleitringdichtungsanordnung umfassend eine Gleitringdichtung (2) mit einem rotierenden Gleitring (3) und einem stationären Gleitring (4) nach einem der vorhergehenden Ansprüche, wobei zwischen einer Gleitfläche (30) des rotierenden Gleitrings (3) und einer Gleitfläche (40) des stationären Gleitrings (4) ein Dichtspalt (5) definiert ist und umfassend eine automatisierte Messeinheit (10), welche eingerichtet ist, einen Verschleiß an der Gleitfläche (40) des stationären Gleitrings (4) basierend auf einer Änderung von elektrischen Größen, insbesondere eines elektrischen Widerstands, in einem Messbereich (6a) einer Verschleiß-Messeinrichtung (6) an der Gleitfläche (40) des stationären Gleitrings (4) zu bestimmen.

12. Gleitringdichtungsanordnung nach Anspruch 11, wobei die automatisierte Messeinheit (10) eingerichtet ist, die Verschleißbestimmung kontinuierlich oder in vorbestimmten Intervallen durchzuführen.

## Claims

1. Stationary slide ring of a mechanical seal assembly, comprising
- a main body (41) having a slide surface (40) and
- a wear-measuring device (6) arranged on the main body (41) to detect wear of the slide surface (40) of the stationary slide ring on the basis of a change in an electrical variable,
- where the wear-measuring device (6) comprises an electrical voltage source (60), a measuring region (6a) on the slide surface (40), an electrical feed line (61), which electrically connects the voltage source (60) to the measuring region (6a), and an electrical return line (62), which electrically connects the measuring region (6a) to the voltage source (60), and
- **characterized in that** the measuring region (6a) is arranged in a recess (42) in the slide surface (40).

2. Stationary slide ring according to claim 1, wherein the recess (42) is completely filled with an electrically conductive material (9).

3. Stationary slide ring according to one of the preceding claims, wherein a depth (T) of the recess (42) is selected such that, when the bottom (45) of the recess (42) is reached, the maximum permissible wear of the slide surface (40) of the stationary slide ring has been reached.

4. Stationary slide ring according to one of the preceding claims, wherein the recess (42) is a curved groove.

5. Stationary slide ring according to one of the preceding claims, wherein the electrical feed line (61) is guided through a first hole (43) in the main body (41) and/or wherein the electrical return line (62) is guided through a second hole (44) in the main body (41).

6. Stationary slide ring according to claim 5, wherein the first hole (43) and the second hole (44) are arranged on the slide surface (40) on the same radius.

7. Stationary slide ring according to claim 5 or 6, wherein the electrical feed line (61) is provided in the region of the first hole (43) by a first electrically conductive filler material (7), wherein the first filler material (7) completely fills the hole (43), and/or wherein the electrical return line (62) is provided in the region of the second hole (44) by a second electrically conductive filler material (8), wherein the second filler material (8) completely fills the second hole (44).

8. Stationary slide ring according to one of claims 5 to 7, wherein a width (B) of the recess (42) is greater than or equal to a diameter (D) of the first and second hole (43, 44).

9. Stationary slide ring according to one of claims 4 to 8, wherein the recess (42) lies on a circumferential portion of the slide surface (40) that is in the center in the radial direction of the stationary slide ring.

10. Stationary slide ring according to one of the preceding claims, comprising
- a first wear-measuring device (6) and a second wear-measuring device (6'), which is opposite the first wear-measuring device (6) at 180°.

11. Mechanical seal assembly, comprising a mechanical seal (2) comprising a rotating slide ring (3) and a stationary slide ring (4) according to one of the preceding claims, wherein a sealing gap (5) is defined between a slide surface (30) of the rotating slide ring (3) and a slide surface (40) of the stationary slide ring (4), and comprising an automated measuring unit (10), which is configured to determine wear of the slide surface (40) of the stationary slide ring (4) on the basis of a change in electrical variables, in particular an electrical resistance, in a measuring region (6a) of a wear-measuring device (6) on the slide surface (40) of the stationary slide ring (4).

12. Mechanical seal assembly according to claim 11, wherein the automated measuring unit (10) is configured to carry out the wear determination continuously or in predetermined intervals.

## Revendications

1. Bague de glissement fixe d'un ensemble d'étanchéité à bague de glissement comprenant
- un corps de base (41) avec une surface de glissement (40) et
- un dispositif de mesure d'usure (6) qui est disposé sur le corps de base (41) pour détecter une usure de la surface de glissement (40) de la bague de glissement fixe sur la base d'une modification d'une grandeur électrique,
- dans laquelle le dispositif de mesure d'usure (6) présente une source de tension électrique (60), une zone de mesure (6a) sur la surface de glissement (40), une ligne d'alimentation électrique (61) qui relie électriquement la source de tension (60) à la zone de mesure (6a) et une ligne de retour électrique (62) qui relie électriquement la zone de mesure (6a) à la source de tension (60) et
- **caractérisée en ce que** la zone de mesure (6a) est disposée dans un évidement (42) dans la surface de glissement (40).

2. Bague de glissement fixe selon la revendication 1, dans laquelle la cavité (42) est entièrement remplie d'un matériau électriquement conducteur (9).

3. Bague de glissement fixe selon l'une quelconque des revendications précédentes, dans laquelle une profondeur (T) de l'évidement (42) est choisie de sorte qu'une usure maximale admissible de la surface de glissement (40) de la bague de glissement fixe est atteinte lors de l'atteinte d'un fond (45) de l'évidement (42).

4. Bague de glissement fixe selon l'une quelconque des revendications précédentes, dans laquelle l'évidement (42) est une rainure en forme d'arc.

5. Bague de glissement fixe selon l'une quelconque des revendications précédentes, dans laquelle la ligne d'alimentation électrique (61) est acheminée à travers un premier alésage (43) dans le corps de base (41) et/ou dans laquelle la ligne de retour électrique (62) est acheminée à travers un second alésage (44) dans le corps de base (41).

6. Bague de glissement fixe selon la revendication 5, dans laquelle le premier alésage (43) et le second alésage (44) sont disposés sur un même rayon contre la surface de glissement (40).

7. Bague de glissement fixe selon la revendication 5 ou 6, dans laquelle la ligne d'alimentation électrique (61) est fournie dans la zone du premier alésage (43) par un premier matériau de remplissage (7) électriquement conducteur, dans laquelle le premier matériau de remplissage (7) remplit complètement l'alésage (43), et/ou dans laquelle la ligne de retour électrique (62) est fournie dans la zone du second alésage (44) par un second matériau de remplissage (8) électriquement conducteur, dans laquelle le second matériau de remplissage (8) remplit complètement le second alésage (44).

8. Bague de glissement fixe selon l'une quelconque des revendications 5 à 7, dans laquelle une largeur (B) de l'évidement (42) est supérieure ou égale à un diamètre (D) des premier et second alésages (43, 44).

9. Bague de glissement fixe selon l'une quelconque des revendications 4 à 8, dans laquelle l'évidement (42) se trouve sur une section circonférentielle médiane de la surface de glissement (40) dans la direction radiale de la bague de glissement fixe.

10. Bague de glissement fixe selon l'une quelconque des revendications précédentes, comprenant
- un premier dispositif de mesure d'usure (6) et un second dispositif de mesure d'usure (6'), qui est opposé au premier dispositif de mesure d'usure (6) de 180°.

11. Ensemble d'étanchéité à bague de glissement comprenant un joint d'étanchéité à bague de glissement (2) avec une bague de glissement rotative (3) et une bague de glissement fixe (4) selon l'une quelconque des revendications précédentes, dans lequel une fente d'étanchéité (5) est définie entre une surface de glissement (30) de la bague de glissement rotative (3) et une surface de glissement (40) de la bague de glissement fixe (4) et comprenant une unité de mesure automatisée (10) qui est configurée pour détecter une usure sur la surface de glissement (40) de la bague de glissement fixe (4) sur la base d'une modification de grandeurs électriques, en particulier d'une résistance électrique, dans une zone de mesure (6a) d'un dispositif de mesure d'usure (6) sur la surface de glissement (40) de la bague de glissement fixe (4).

12. Ensemble d'étanchéité à bague de glissement selon la revendication 11, dans lequel l'unité de mesure automatisée (10) est configurée pour effectuer la détermination de l'usure en continu ou à des intervalles prédéterminés.
